(19) Europäisches Patentamt
European Patent Office
Office européen des brevets

(11) **EP 2 435 855 B1**

(12) **FASCICULE DE BREVET EUROPEEN**

(45) Date de publication et mention de la délivrance du brevet:
**02.12.2015 Bulletin 2015/49**

(21) Numéro de dépôt: **10728825.0**

(22) Date de dépôt: **27.05.2010**

(51) Int Cl.:
**G01V 1/20** (2006.01)    **G01H 9/00** (2006.01)

(86) Numéro de dépôt international:
**PCT/FR2010/051016**

(87) Numéro de publication internationale:
**WO 2010/136723 (02.12.2010 Gazette 2010/48)**

(54) **HYDROPHONE A FIBRE A RESEAU DE BRAGG AVEC AMPLIFICATEUR A MEMBRANE**

FASER-BRAGG-GITTER-HYDROPHON MIT EINEM MEMBRANVERSTÄRKER

FIBER BRAGG GRATING HYDROPHONE COMPRISING A DIAPHRAGM AMPLIFIER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **29.05.2009 FR 0953575**

(43) Date de publication de la demande:
**04.04.2012 Bulletin 2012/14**

(73) Titulaire: **IXBLUE**
**78160 Marly-le-Roi (FR)**

(72) Inventeurs:
• **GROSSO, Gilles**
**83140 Six Fours les Plages (FR)**

• **MOSCA, Frédéric**
**13005 Marseille (FR)**

(74) Mandataire: **Chauvin, Vincent et al**
**Cabinet Harle et Phelip**
**14/16 rue Ballu**
**75009 Paris (FR)**

(56) Documents cités:
**EP-A- 1 310 801**          **FR-A- 2 562 741**
**GB-A- 2 145 237**          **US-A- 6 160 762**
**US-A1- 2004 237 648**      **US-B1- 6 175 108**

**Description**

L'invention se rapporte au domaine de la mesure de pression acoustique, notamment en milieu sous-marin.

Les capteurs acoustiques tels les hydrophones sont classiquement utilisés en milieu sous-marin pour détecter des variations de pression acoustique qui peuvent être provoquées par des ondes sismiques, la présence de mammifères marins ou de navires, par exemple.

Ils peuvent être utilisés en statique et déployé sur le fond sous-marin pour réaliser une surveillance acoustique, ou être tractés par un navire ou un sous-marin.

La majorité des capteurs acoustiques connus est basée sur l'utilisation de composants piézoélectriques dont la déformation entraîne une variation de pression qui peut être mesurée électroniquement.

Cependant, ces capteurs nécessitent une installation locale, les rendant difficilement utilisables pour les applications remorquées, comme capteur sismique par exemple. De plus, les composants piézoélectriques sont sensibles aux perturbations électromagnétiques.

Pour remédier à ces inconvénients, il existe des hydrophones à fibre optique de type DFB FL (« Distributed Feedback Fibre Laser ») comprenant un réseau de Bragg, et qui ont pour propriétés d'émettre des longueurs d'onde très fines sensibles à la contrainte mécanique appliquée sur la fibre optique. La mesure de ses variations de longueurs d'onde émises permet de déduire la contrainte appliquée sur la fibre optique et donc la pression externe.

Ce type de capteur acoustique présente des avantages tels que l'absence de composants électroniques dans la partie immergée, les rendant plus facilement remorquables, et la possibilité de multiplexer sur une même fibre plusieurs capteurs.

Cependant, ces capteurs à fibre optique présentent une sensibilité insuffisante pour la détection des faibles variations de pression.

Pour amplifier ces faibles variations de pression, il est connu d'amplifier mécaniquement la contrainte mécanique appliquée sur la fibre optique.

Des capteurs à fibre optique comprennent une fibre optique entourée d'un cylindre de résine élastomère de façon à augmenter les contraintes au niveau de la fibre optique par applications de contraintes de cisaillement sur la fibre optique générée par le cylindre élastique.

Cependant, cette technologie ne permet pas d'atteindre les sensibilités requises pour la détection de petites variations de pression acoustique. De plus, le réseau de Bragg étant encapsulé par la résine, son fonctionnement est modifié et sa fréquence laser diminue.

Le document WO 2006/034538 divulgue une fibre optique fixée à un support flexible. Ce dernier permet d'amplifier les signaux acoustiques. Le document US2002/0154860 décrit un capteur de pression à fibre optique et à réseau de Bragg.

Il existe également des capteurs acoustiques du type "tube de dentifrice" ayant une fibre optique munie d'un réseau de Bragg entouré par une enveloppe déformable remplie d'un fluide incompressible. La fibre laser est solidaire des extrémités de l'enveloppe déformable.

L'inconvénient de ces solutions de l'art antérieur est qu'elles fournissent des sensibilités à la pression extérieure trop faibles.

Le demandeur s'est donc attaché à la mise au point d'un hydrophone à fibre à réseau de Bragg ayant une sensibilité améliorée par rapport aux hydrophones connus.

Un tel dispositif est fourni selon l'invention.

L'invention concerne un hydrophone à fibre à réseau de Bragg comprenant une cavité fluide, et une fibre optique dans laquelle est intégrée un réseau de Bragg, ladite fibre optique traversant ladite cavité fluide de manière à ce que ledit réseau de Bragg soit positionné à l'intérieur de celle-ci.

Selon l'invention :

- ladite cavité fluide est remplie d'un fluide compressible et est délimitée par une enveloppe rigide comportant deux faces d'extrémités solidaires de la fibre optique,
- au moins une des deux faces d'extrémités de l'enveloppe rigide comprend une ouverture fermée par une membrane déformable solidaire de ladite fibre optique, ladite membrane déformable étant apte à être déformée par une différence des pressions exercées sur ses faces, entraînant une variation de la longueur de la fibre optique mesurée par une variation de longueur d'onde d'un flux lumineux extrait de la fibre optique.

L'invention fournit ainsi un hydrophone à fibre à réseau de Bragg ayant une sensibilité améliorée par rapport aux hydrophones connus, et permettant d'atteindre des gains supérieurs à 1000.

Dans différents modes de réalisation possibles, le dispositif de l'invention peut être défini également par les caractéristiques suivantes qui pourront être considérées isolément ou selon toutes leurs combinaisons techniquement possibles et qui apportent chacune des avantages spécifiques :

- les deux faces d'extrémités de l'enveloppe rigide comprennent chacune une ouverture fermée par une membrane déformable solidaire de ladite fibre optique,
- ladite fibre optique est une fibre optique précontrainte, la tension de ladite fibre optique étant maintenue par des moyens de maintien, lesdits moyens de maintien étant en appui sur chacune des faces d'extrémités respectives de l'enveloppe rigide,
- les moyens de maintien sont disposés à l'extérieur de la cavité fluide, chaque moyen de maintien ayant une première extrémité solidaire de l'enveloppe rigide et une deuxième extrémité traversée par la fibre optique et solidaire de celle-ci,
- l'hydrophone à fibre à réseau de Bragg comprend au moins un filtre hydrostatique coopérant avec la cavité fluide, chaque filtre hydrostatique étant muni d'un orifice apte à permettre une communication fluidique entre l'intérieur et l'extérieur de la cavité fluide,
- chaque filtre hydrostatique est associé à une des membranes déformables, chaque filtre hydrostatique présentant un réservoir délimité par une enveloppe externe déformable et par une des faces d'extrémité de l'enveloppe rigide, ledit réservoir étant en communication fluidique avec la cavité fluide par l'intermédiaire dudit orifice traversant la membrane déformable, ladite enveloppe déformable étant fixée à l'enveloppe rigide de façon hermétique.

Le filtre hydrostatique permet de compenser l'hydrophone en pression lors de variation de pression statique (immersion) ou de température. Lors d'une variation lente de pression ou de température, un écoulement s'établit entre la cavité fluide et le réservoir, visant à équilibrer les pressions intérieure et extérieure. Les très basses fréquences sont ainsi filtrées. La dimension de l'orifice du filtre hydrostatique détermine la fréquence de coupure basse et donc détermine la limite basse de la bande d'utilisation de l'hydrophone.

L'hydrophone est utilisable dans une gamme de fréquence acoustique large, entre 0,4 Hz et 10 kHz.

Lorsque l'hydrophone est immergé en milieu sous marin, et utilisé en statique, les filtres hydrostatiques permettent d'atténuer l'effet des vagues et de la houle.

- la section des membranes déformables est inférieure à celle de l'enveloppe déformable des filtres hydrostatiques,
- les éléments constituant ledit hydrophone présentent une fréquence de résonance en dehors de la gamme de fréquence comprise entre 0,4 Hz et 10 kHz,
- l'hydrophone à fibre à réseau de Bragg comprend une enveloppe externe, souple et hermétique, entourant l'ensemble formé par l'enveloppe rigide et les filtres hydrostatiques, ladite enveloppe externe étant remplie d'un fluide de façon à transmettre les variations de pression extérieures à la cavité fluide,
- le fluide compressible de la cavité fluide présente un module de compressibilité inférieur à 1,5 GPa, et de préférence inférieur à 0,5 GPA.

L'invention sera décrite plus en détail en référence aux dessins annexés dans lesquels :

- la figure 1 représente une coupe longitudinale d'un hydrophone à fibre à réseau de Bragg, selon un mode de réalisation possible de l'invention,
- la figure 2 représente une coupe longitudinale de l'hydrophone avec des moyens de maintien,
- la figure 3 représente une vue en perspective de l'hydrophone avec les moyens de maintien,
- la figure 4 représente le détail des moyens de maintien,
- la figure 5 représente une coupe longitudinale de l'hydrophone avec des filtres hydrostatiques.

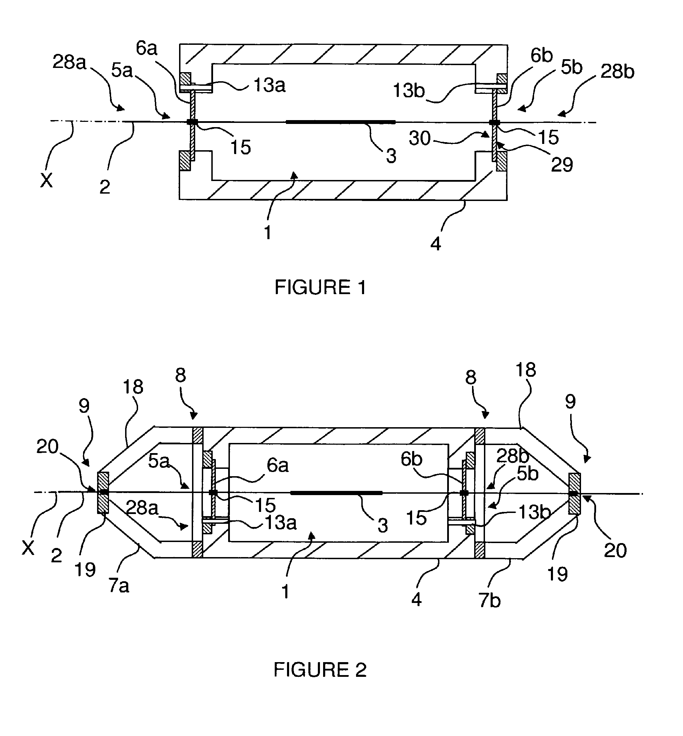

La figure 1 représente le détail d'un hydrophone à fibre à réseau de Bragg, selon un mode de réalisation possible de l'invention.

L'hydrophone à fibre à réseau de Bragg comprend une fibre optique 2 et une cavité fluide 1 remplie d'un fluide compressible. La cavité fluide 1 est délimitée par une enveloppe rigide 4 comprenant deux faces d'extrémité 28a, 28b, solidaires de la fibre optique 2, et opposées.

Au moins une des deux faces d'extrémité 28a, 28b de l'enveloppe rigide 4 comprend une ouverture 5a, 5b fermée par une membrane déformable 6a, 6b solidaire de la fibre optique 2.

Dans l'exemple de la figure 1 et les autres qui suivent, les deux faces d'extrémité 28a, 28b de l'enveloppe rigide 4 sont formées par une ouverture 5a, 5b fermée par une membrane déformable 6a, 6b solidaire de la fibre optique 2.

Un réseau de Bragg 3 est intégré dans la fibre optique 2, formant une cavité laser. Le réseau de Bragg 3 peut être photo inscrit dans la fibre optique 2. La fibre optique 2 traverse la cavité fluide 1 selon un axe principal (X) de manière à ce que le réseau de Bragg 3 soit positionné à l'intérieur de celle-ci.

Dans cet exemple, la fibre optique 2 présente une sensibilité comprise entre 3 à 4,5 nm / MPa, un diamètre de 125 $\mu$m, et un module d'Young compris entre 50 GPa et 90 GPa, de préférence égal à 70 GPa.

Les deux ouvertures 5a, 5b sont opposées, et séparées par le réseau de Bragg 3.

Les membranes déformables 6a, 6b sont traversées par la fibre optique 2, et sont solidaires de celle-ci.

Les membranes déformables 6a, 6b peuvent être fixées à la fibre optique 2 par soudure ou collage, par exemple. La soudure peut être une soudure laser avec ou sans férule. Le collage peut être un collage par coating polyamide ou par colle Epoxy.

Les membranes déformables 6a, 6b sont aptes à être déformées par une différence de pressions exercées sur ses faces, entraînant une variation de la longueur de la fibre optique 2 mesurée par une variation de longueur d'onde d'un flux lumineux extrait de la fibre optique 2. Plus précisément, c'est la variation de la longueur de la cavité laser qui est mesurée.

La relation entre les variations de longueurs d'onde et de pression s'exprime de la manière suivante :

$$\Delta\lambda = S_{opt}G_{m\acute{e}ca}\Delta P$$

Avec ∆P, la pression appliquée sur la structure, $S_{opt}$, la sensibilité du réseau de Bragg "nu" et $G_{m\acute{e}ca}$, le gain mécanique recherché.

Le pompage optique de la fibre optique 2 peut être effectué par une diode laser à 980 nm, par exemple. Le flux lumineux extrait de la fibre optique 2 présente une longueur d'onde qui est fonction de l'allongement ou du rétrécissement de la fibre optique 2. Les variations de longueur d'onde sont mesurées par un interféromètre de Mach Zehnder, par exemple.

Lorsque la pression extérieure Pe, c'est-à-dire à l'extérieur de la cavité fluide 1 varie, les membranes déformables 6a, 6b se déforment et l'enveloppe rigide 4 ne se déforme pas ou quasiment pas.

Lorsque la pression extérieure Pe est supérieure à la pression intérieure Pi, les membranes déformables 6a, 6b se déforment et s'incurvent vers l'intérieur de la cavité fluide 1, entraînant un rétrécissement de la fibre optique 2 ou cavité laser.

La pression extérieure Pe est exercée sur la face externe 29 des membranes déformables 6a, 6b, tandis que la pression intérieure Pi est exercée sur la face interne 30 des membranes déformables 6a, 6b.

Et vice-versa, lorsque la pression extérieure Pe est inférieure à la pression intérieure Pi, les membranes déformables 6a, 6b se déforment et s'incurvent vers l'extérieur de la cavité fluide 1, entraînant un allongement de la fibre optique 2.

La longueur de l'hydrophone est inférieure aux longueurs d'onde acoustiques mesurées. Le champ de pression est supposé homogène.

Par conséquent, en statique, les membranes déformables 6a, 6b se déforment en sens opposé.

Les membranes déformables 6a, 6b peuvent être en métal, ou en polymère, par exemple. Elles peuvent être en bronze ou en laiton.

Les membranes déformables 6a, 6b et l'enveloppe rigide 4 délimitent la cavité fluide 1 et forment un ensemble étanche.

Dans l'exemple des figures 1 à 5, l'enveloppe rigide 4 présente une forme tubulaire. L'enveloppe rigide 4 présente un module d'Young le plus élevé possible, supérieur à 100 GPa.

L'enveloppe rigide 4 doit être la moins déformable possible. L'enveloppe rigide 4 peut être en titane, par exemple, avec un module d'Young de 120 GPa. Les ouvertures 5a, 5b de l'enveloppe rigide 4 et les membranes déformables 6a, 6b ont une forme circulaire.

Le fluide compressible de la cavité fluide 1 présente un module de compressibilité inférieur à 1,5 GPa.

Le fluide compressible peut être à base de fluorocarbone, comme par exemple de perfluorohexane ($C_6F_{14}$) qui a un module de compressibilité de 1 GPa.

Dans l'exemple des figures 1 à 5, le fluide utilisé est du fluor inerte fourni par la société 3M.

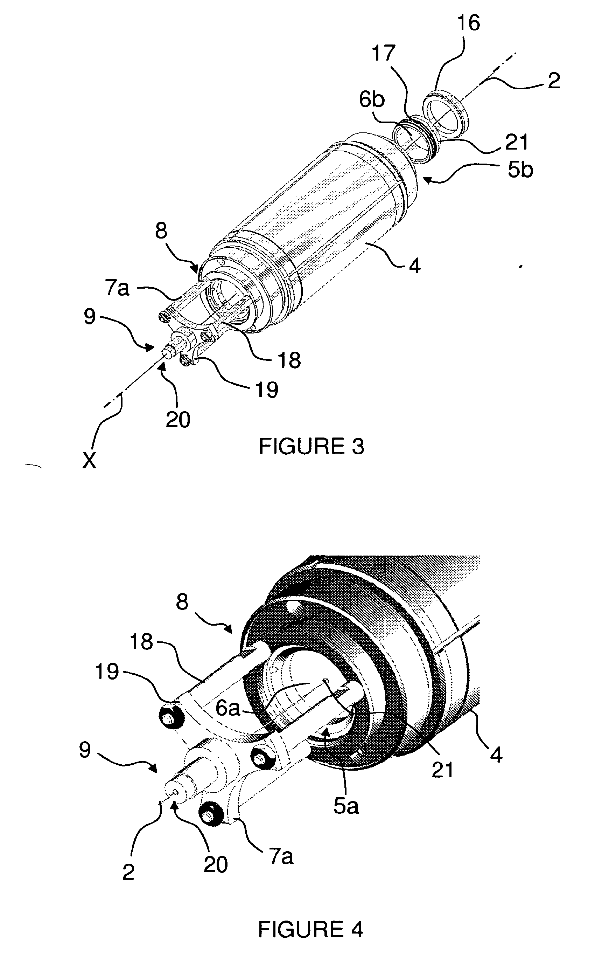

Dans un exemple de montage possible illustré sur la figure 3, les membranes déformables 6a, 6b sont solidaires d'une pièce annulaire 21 de façon à former une douille.

Cette douille est insérée dans une des ouvertures 5a, 5b de l'enveloppe rigide 4 de façon à l'obstruer hermétiquement. Un joint torique 17 peut être prévu entre la pièce annulaire 21 et la paroi de l'enveloppe rigide 4 délimitant une des ouvertures 5a, 5b, pour assurer l'étanchéité. Un écrou de blocage 16 vient bloquer la douille longitudinalement contre une partie de l'enveloppe rigide 4 formant butée.

Une fois les deux membranes déformables 6a, 6b assemblées, la fibre optique 2 est enfilée dans ces dernières de façon à traverser l'enveloppe rigide 4 suivant l'axe principal (X).

Dans cet exemple où l'enveloppe rigide 4 est en forme de tube, l'axe principal (X) est un axe longitudinal central. La fibre optique 2 passe par le centre des membranes déformables 6a, 6b.

Le principe de fonctionnement de l'hydrophone à fibre à réseau de Bragg ou laser est basé sur l'allongement d'une cavité laser (réseau de Bragg 3).

La géométrie du réseau de Bragg 3 et l'indice du milieu déterminent la fréquence de résonance de la cavité laser, donc sa longueur d'onde. La pression radiale exercée sur la cavité laser en modifie la géométrie et induit des contraintes dans la silice de la fibre. L'allongement et le niveau de contrainte dans la cavité laser modifient respectivement la géométrie et l'indice du milieu. Ces modifications induisent une variation de la fréquence de résonance, donc de la longueur d'onde du laser. L'hydrophone à fibre optique utilise cette propriété pour détecter les ondes acoustiques.

La sensibilité de l'hydrophone est caractérise par le rapport $\dfrac{\varepsilon_x}{P_e}$ où $\varepsilon_x$ est l'allongement axial de la fibre optique (cavité laser) et $P_e$ la pression extérieure. Dans le cas de la fibre seule, la sensibilité théorique est

$$\frac{\varepsilon_x}{P_e} = 2\frac{v}{E} = 4.7 * 10^{-12}$$ avec E et v respectivement le module de Young et le coefficient de poisson de la silice.

Les membranes déformables 6a, 6b, le fluide compressible et l'enveloppe rigide 4 forment un amplificateur mécanique permettant d'accroître cette sensibilité à la pression extérieure $P_e$.

Cet amplificateur permet d'amplifier les déformations axiales tandis que les déformations radiales restent très faibles.

Lors du fonctionnement de l'hydrophone, une onde acoustique basse fréquence entraîne une variation locale de la pression autour de l'hydrophone.

La pression extérieure (Pe) devient donc différente de la pression (Pi) régnant au sein de la cavité fluide 1.

La cavité fluide 1 via sa compressibilité tend à équilibrer sa pression avec la pression extérieure par une variation de son volume :

$$-\frac{1}{\chi_S}\frac{dV}{V} = (Pe - Pi)$$

Avec $\chi_S$, la compressibilité adiabatique du fluide. V, le volume de cavité fluide 1 et dV, la variation de volume de la cavité.

La géométrie de l'hydrophone contraint la fibre optique 2 à se déformer axialement.

La variation de volume prend la forme :

$$dV = dx * S_{ax} + (\pi R^2 - \pi(R + dr)^2)l$$

Avec Sax, la surface effective de la membrane 6a, 6b, R le rayon intérieur de l'enveloppe rigide 4 et l la longueur de l'enveloppe rigide 4.

$$\text{Or}: dx = \frac{P * S_{ax}}{k_{ax}} \text{ et } dr = \frac{P * S_r}{k_{rad}}$$

Avec $k_{ax}$ et $k_{rad}$, les raideurs axiales et radiales du système, $S_r$ la surface radiale intérieure de l'enveloppe rigide 4 et P la pression incidente.

$k_{rad}$ est principalement dépendant du type de matériau de l'enveloppe rigide 4. $k_{ax}$ dépend à la fois des propriétés et dimensions de la membrane 6a, 6b ainsi que de la raideur de la cavité fluide 1.

Un tel système oriente axialement les déformations par : $k_{ax} \ll k_{rad}$.

Un optimum est à déterminer pour maximiser le gain en déformation. Celui-ci peut s'écrire de la forme :

$$G = \frac{A}{B\dfrac{S}{V} + \dfrac{C}{S^2}}$$

Avec A, B et C des constantes, V le volume de la cavité fluide 1 et S la section de la membrane 6a, 6b.

Le gain peut s'exprimer également comme le rapport entre la déformation axiale de la fibre optique due à l'amplificateur mécanique, et la déformation axiale de cette fibre due à la pression sur celle-ci nue.

Le mode de réalisation qui suit donne un exemple de dimensions possibles pour l'hydrophone.

L'enveloppe rigide 4 peut avoir une longueur de 250 mm, avec un diamètre interne de 30 mm et externe de 35 mm. La distance entre les deux membranes déformables 6a, 6b peut être de 70 mm, leur épaisseur de 0,1 mm, et leur diamètre de 22 mm. La fibre optique peut avoir un diamètre de 125 µm, et le réseau de Bragg 3 peut s'étendre sur une longueur de 50 mm. Le module de compressibilité du fluide compressible peut être de 1 GPa. Ces paramètres permettent d'atteindre un gain de 1700.

Les deux membranes déformables 6a, 6b présentent un module d'Young le moins élevé possible, inférieur à 100 GPa.

D'autres dimensions sont également possibles, entraînant des gains différents.

De manière générale, l'hydrophone selon l'invention permet d'atteindre des gains supérieurs à 1000.

La fibre optique 2 est une fibre optique précontrainte. Comme illustré sur les figures 2 à 4, la tension de la fibre optique 2 est maintenue par des moyens de maintien 7a, 7b disposés de part et d'autre de la cavité fluide 1, et fixé sur chacune des faces d'extrémité 28a, 28b de l'enveloppe rigide 4.

Ces moyens de maintien 7a, 7b sont disposés devant chacune des ouvertures 5a, 5b de l'enveloppe rigide 4, et à l'extérieur de la cavité fluide 1. Chaque moyen de maintien 7a, 7b a une première extrémité 8 solidaire de l'enveloppe rigide 4 et une deuxième extrémité 9 traversée par la fibre optique 2 et solidaire de celle-ci.

Dans les exemples des figures 2 à 4, les moyens de maintien 7a, 7b sont en appui sur les bords d'extrémité de l'enveloppe rigide 4. Ils comprennent trois pattes 18 ayant chacune une première extrémité fixée sur un bord d'extrémité de l'enveloppe rigide 4 et une deuxième extrémité fixée à un support à trois branches 19 terminée par une bague de maintien muni d'un orifice 20 en son centre. Cet orifice 20 est prévu pour le passage de la fibre optique 2 et sa fixation.

Une fois l'amplificateur mécanique monté, la fibre optique 2 est enfilée dans l'orifice 15 prévu dans la membrane déformable 6a, 6b de façon à ce que le réseau de Bragg 3 soit placé au centre de la cavité fluide 1.

La fibre optique 2 est ensuite fixée à la deuxième extrémité 9 d'un des moyens de maintien 7a, 7b par soudure ou collage.

Une fois la fibre optique 2 fixée d'un coté, on applique de l'autre coté une précontrainte calibrée en tirant sur la fibre optique 2.

La fibre optique 2 étant tendue, elle est soudée ou collée à la deuxième extrémité 9 d'un autre moyen de maintien 7a, 7b.

La précontrainte étant permanente, la fibre optique 2 est fixée sur les deux membranes déformables 6a, 6b par collage ou soudure laser.

De cette façon on obtient un équilibre parfait de la tension de la fibre optique 2 de chaque côté des membranes déformables 6a, 6b.

La fibre optique 2 est ensuite coupée, puis raboutée de part et d'autre avec de la fibre optique gainée.

Les moyens de maintien 7a, 7b permettent d'éviter à la fibre optique 2 de se replier sur elle-même lors d'une forte pression acoustique.

La précontraine appliquée sur la fibre optique 2 est calculée pour être supérieure aux déformations maximales que pourra subir le dispositif. Ainsi la fibre optique 2 sera toujours tendue pendant le fonctionnement de l'hydrophone.

Cette disposition permet de diminuer au maximum la raideur du système d'amplification mécanique. Les fonctions amplifications et tenue en pré-contrainte sont dissociées.

La pré-contrainte maximale applicable sur la fibre est de 2N. Ce qui correspond à une contrainte maximale de : $\sigma = \dfrac{F}{s_{fibre}} = 1.63.10^8 \, Pa$ , pour une fibre optique 2 de diamètre 125 µm.

Le module de Young de la fibre optique 2 étant de 70 GPa, la déformation maximale de fonctionnement en dilatation de la fibre optique 2 est donc de $\varepsilon_{pc} = \dfrac{\sigma}{E} = 2.3.10^{-3}$ . La pression acoustique maximale de fonctionnement de l'hydrophone est donc de : $P_{max} = \dfrac{\varepsilon_{pc}}{\varepsilon_{1Pa}} = \dfrac{\varepsilon_{pc}}{G.\varepsilon_{ref}} = \dfrac{2.3.10^{-3}}{4.72.10^{-9}} = 4.87 bar$ .

Soit un niveau acoustique de fonctionnement maximal de :

$$S_{max} = 20 \log_{10}\left(\frac{P_{max}}{P_{ref}}\right) = 20 \log_{10}\left(\frac{4.87.10^5}{1.10^{-6}}\right) = 234 dB$$

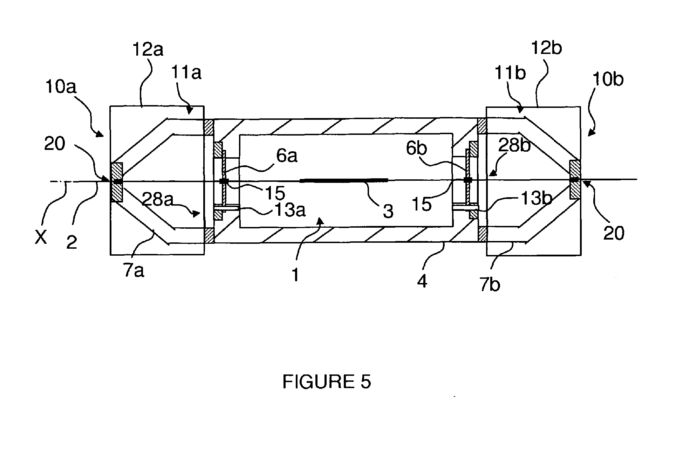

Comme illustré sur la figure 5, l'hydrophone à fibre à réseau de Bragg comprend au moins un filtre hydrostatique 10a, 10b associé à une membrane déformable 6a, 6b respective de l'enveloppe rigide 4. Chaque filtre hydrostatique 10a, 10b a un réservoir 11a, 11b délimité par une enveloppe externe déformable 12a, 12b et par une des membranes déformables 6a, 6b de l'amplificateur mécanique.

Le réservoir 11a, 11b est en communication fluidique avec la cavité fluide 1 par l'intermédiaire d'un orifice 13a, 13b traversant chaque membrane déformable 6a, 6b. L'enveloppe déformable 12a, 12b est fixée sur l'enveloppe rigide 4 de façon hermétique, et recouvre le moyen de maintien 7a, 7b associé à la membrane déformable 6a, 6b.

Dans l'exemple de la figure 5, l'hydrophone à fibre à réseau de Bragg comprend deux filtres hydrostatiques 10a, 10b positionnés de part et d'autre de l'enveloppe rigide 4.

L'enveloppe externe déformable 12a, 12b du filtre hydrostatique 10a, 10b a une forme de capuchon et peut être en polymère, par exemple.

Les réservoirs 11 a, 11 b et la cavité fluide 1 sont remplis du fluide compressible.

Chaque enveloppe externe déformable 12a, 12b transmet les variations de pression à une membrane déformable 6a, 6b respective par l'intermédiaire du fluide compressible.

Les orifices 13a, 13b des filtres hydrostatiques 10a, 10b ont un diamètre compris entre 100 $\mu$m et 20 $\mu$m, de préférence égal à 50 $\mu$m.

Les filtres hydrostatiques 10a, 10b permettent de mettre le fluide interne à la pression hydrostatique après une variation lente de pression suite à un changement de température ou d'immersion. Ainsi il est possible de s'affranchir de la pression hydrostatique et de ne tenir compte que des variations de pression autour de cette pression. Il est à noter que ces filtres hydrostatiques représentent une limite pour la détection des très basses fréquences. En effet, le temps de réaction du filtre hydrostatique déterminera la fréquence la plus basse mesurable par l'hydrophone. Les filtres hydrostatiques sont des filtres passe-hauts. Ainsi si la fréquence de l'onde acoustique est inférieure à la fréquence de coupure du filtre hydrostatique, il sera sans effet sur cette onde acoustique.

Les très basses fréquences sont filtrées par ce procédé. La dimension du trou des filtres hydrostatiques détermine la fréquence de coupure basse et donc détermine la limite basse de la bande d'utilisation de l'hydrophone. Plus le diamètre de l'orifice 13a, 13b est petit, et plus la fréquence de coupure est basse.

La fréquence de coupure est inférieure à 10 Hz, de préférence égale à 0,4 Hz.

L'hydrophone permet de détecter des ondes acoustiques dans la bande de fréquence comprise entre 0,4 Hz et 10 kHz.

Les éléments constituant l'hydrophone, comme par exemple les membranes déformables 6a, 6b, l'enveloppe rigide 4 et la fibre optique 2, présentent une fréquence de résonance en dehors de la gamme de fréquence allant de 0,4 Hz à 10 kHz.

La section des membranes déformables 6a, 6b est inférieure à celle de l'enveloppe déformable 12a, 12b des filtres hydrostatiques 10a, 10b.

Le diamètre des membranes déformables 6a, 6b est inférieur au diamètre interne de l'enveloppe rigide 4, considéré en dehors des extrémités de l'enveloppe rigide 4.

Les orifices 13a, 13b des filtres hydrostatiques 10a, 10b permettent un équilibrage en pression entre l'intérieur de l'enveloppe rigide 4 et l'intérieur des réservoirs 11 a, 11 b des filtres hydrostatiques 10a, 10b, et une compensation en température, rendant l'hydrophone insensible aux variations lentes de pression et de température lors des immersions de l'hydrophone à des profondeurs variables.

Lorsque l'hydrophone est immergé en milieu sous marin, et utilisé en statique, les filtres hydrostatiques 10a, 10b permettent d'atténuer l'effet des vagues et de la houle.

Les enveloppes externes déformables 12a, 12b du filtre hydrostatique 10a, 10b sont fixées de façon étanche sur l'enveloppe rigide 4 par des bagues de serrage (non illustré).

L'hydrophone à fibre à réseau de Bragg comprend des cages supports fixées de part et d'autre de l'enveloppe rigide 4, à ses extrémités (non illustré). Ces cages supports ont une forme tubulaire et comportent trois ouvertures latérales.

Ces cages supports comprennent une extrémité reliée à l'une des extrémités de l'enveloppe rigide 4 et une autre extrémité fermée par un bouchon munie d'un orifice central formant un passage pour la ou les fibres optiques 2 (non illustré). Ce bouchon peut être en ertalyte par exemple.

Des rainures peuvent être prévues sur la surface externe de l'enveloppe rigide 4 pour recevoir des fibres optiques externe pouvant être reliées à d'autres capteurs de pression acoustique, par exemple.

Un capuchon (non illustré) en élastomère peut être prévu à la sortie de l'orifice central du bouchon pour protéger la ou les fibres optiques.

L'hydrophone à fibre à réseau de Bragg peut comprendre une enveloppe externe souple et hermétique (non illustré), entourant l'ensemble formé par l'enveloppe rigide 4, les filtres hydrostatiques 10a, 10b et les cages supports. L'enveloppe externe est cylindrique et remplie d'un fluide de façon à transmettre les variations de pression extérieures à la cavité fluide 1.

Ce fluide peut être du ricin par exemple. L'enveloppe externe peut être en polymère, par exemple en Hypalon®.

Ainsi, l'invention fournit un hydrophone qui permet d'atteindre des gains importants, supérieurs à 1000, et donc des sensibilités acoustiques supérieures à celles atteintes par les hydrophones connus.

De plus, le fait que les membranes soient déformables dans le même sens, rend l'hydrophone insensible au bruit accélérométrique lorsqu'il est tracté par un navire ou un sous marin.

**Revendications**

1. Hydrophone à fibre à réseau de Bragg utilisable dans une gamme de fréquence acoustique large, entre 0.4 Hz et 10 kHz, ledit hydrophone comprenant une cavité fluide (1), et une fibre optique (2) dans laquelle est intégrée un réseau de Bragg (3), ladite fibre optique (2) traversant ladite cavité fluide (1) de manière à ce que ledit réseau de Bragg (3) soit positionné à l'intérieur de celle-ci,
   **caractérisé en ce que** :

   - ladite cavité fluide (1) est remplie d'un fluide compressible et délimitée par une enveloppe rigide (4) s'étendant suivant un axe principal longitudinal (X) et comportant deux faces d'extrémités (28a, 28b) solidaires de la fibre optique (2),
   - l'enveloppe rigide ayant une longueur telle que la longueur de l'hydrophone est inférieure aux longueurs d'onde acoustiques mesurées,
   - ladite fibre optique (2) s'étendant dans la cavité fluide (1) suivant l'axe longitudinal (X),
   - les deux faces d'extrémité (28a, 28b) de l'enveloppe rigide (4) comprenant chacune une ouverture (5a, 5b) fermée par une membrane déformable (6a, 6b) fixée à ladite fibre optique (2), ladite membrane déformable (6a, 6b) étant traversée par la fibre optique (2), et apte à être déformée par une différence des pressions exercées sur ses faces, entraînant une variation de la longueur de la fibre optique (2) mesurée par une variation de longueur d'onde d'un flux lumineux extrait de la fibre optique (2).

2. Hydrophone à fibre à réseau de Bragg selon la revendication 1, **caractérisé en ce que** ladite fibre optique (2) est une fibre optique précontrainte, la tension de ladite fibre optique (2) étant maintenue par des moyens de maintien (7a, 7b), lesdits moyens de maintien étant en appui sur chacune des faces d'extrémité (28a, 28b) respective de l'enveloppe rigide (4).

3. Hydrophone à fibre à réseau de Bragg selon la revendication 2, **caractérisé en ce que** les moyens de maintien (7a, 7b) sont disposés à l'extérieur de la cavité fluide (1), chaque moyen de maintien (7a, 7b) ayant une première extrémité (8) solidaire de l'enveloppe rigide (4) et une deuxième extrémité (9) traversée par la fibre optique (2) et solidaire de celle-ci.

4. Hydrophone à fibre à réseau de Bragg selon l'une quelconque des revendications 1 à 3, **caractérisé en ce qu'**il comprend au moins un filtre hydrostatique (10a, 10b) coopérant avec la cavité fluide (1), chaque filtre hydrostatique (10a, 10b) étant muni d'un orifice (13a, 13b) apte à permettre une communication fluidique entre l'intérieur et l'extérieur de la cavité fluide (1).

5. Hydrophone à fibre à réseau de Bragg selon la revendication 4, **caractérisé en ce que** chaque filtre hydrostatique (10a, 10b) est associé à une des membranes déformables (6a, 6b) respectives, chaque filtre hydrostatique (10a, 10b) présentant un réservoir (11 a, 11 b) délimité par une enveloppe externe déformable (12a, 12b) et par une des faces d'extrémité (28a, 28b) de l'enveloppe rigide (4), ledit réservoir (11a, 11b) étant en communication fluidique avec la cavité fluide (1) par l'intermédiaire dudit orifice (13a, 13b) traversant la membrane déformable (6a, 6b), ladite enveloppe externe déformable (12a, 12b) étant fixée à l'enveloppe rigide (4) de façon hermétique.

6. Hydrophone à fibre à réseau de Bragg selon la revendication 5, **caractérisé en ce que** la section des membranes déformables (6a, 6b) est inférieure à celle de l'enveloppe externe déformable (12a, 12b) des filtres hydrostatiques (10a, 10b).

7. Hydrophone à fibre à réseau de Bragg selon l'une quelconque des revendications 1 à 6, **caractérisé en ce que** les éléments constituant ledit hydrophone présentent une fréquence de résonance en dehors de la gamme de fréquence comprise entre 0,4 Hz et 10 kHz.

8. Hydrophone à fibre à réseau de Bragg selon l'une quelconque des revendications 1 à 7, **caractérisé en ce qu'**il comprend une enveloppe externe, souple et hermétique, entourant l'ensemble formé par l'enveloppe rigide (4) et les filtres hydrostatiques (10a, 10b), ladite enveloppe externe étant remplie d'un fluide de façon à transmettre les variations de pression extérieures à la cavité fluide (1).

9. Hydrophone à fibre à réseau de Bragg selon l'une quelconque des revendications 1 à 8, **caractérisé en ce que** le fluide compressible de la cavité fluide (1) présente un module de compressibilité inférieur à 1,5 GPa.

**Patentansprüche**

1. Faser-Bragg-Gitter-Hydrophon, verwendbar in einem breiten akustischen Frequenzbereich, wischen 0,4 Hz und 10 kHz, wobei das Hydrophon eine Fluidkammer (1) und eine optische Faser (2) aufweist, in der ein Bragg-Gitter (3) integriert ist, wobei die optische Faser (2) die Fluidkammer (1) derart durchquert, daß das Bragg-Gitter (3) im Inneren derselben angeordnet ist,
   **dadurch gekennzeichnet, daß**
   die Fluidkammer (1) mit einem komprimierbaren Fluid gefüllt und durch eine feste Hülle (4) begrenzt ist, die sich entlang einer Hauptlängsachse (X) erstreckt und zwei mit der optischen Faser (2) verbundene Enden (28a, 28b) aufweist,
   wobei die feste Hülle eine solche Länge hat, daß die Länge des Hydrophons geringer als die gemessenen akustischen Wellenlängen ist,
   wobei sich die optische Faser (2) in der Fluidkammer (1) entlang der Längsachse (X) erstreckt,
   wobei die beiden Enden (28a, 28b) der festen Hülle (4) jeweils eine durch eine verformbare, an der optischen Faser (2) befestigte Membrane (6a, 6b) verschlossene Öffnung (5a, 5b) aufweisen, wobei die verformbare Membrane (6a, 6b) von der optischen Faser (2) durchquert wird und geeignet ist, durch eine Differenz der auf seine Wandungen wirkenden Drücke verformt zu werden, was eine Änderung der Länge der optischen Faser (2) bewirkt, die durch eine Änderung der Wellenlänge eines aus der optischen Faser (2) entnommenen Lichtstroms gemessen wird.

2. Faser-Bragg-Gitter-Hydrophon gemäß Anspruch 1, **dadurch gekennzeichnet, daß** die optische Faser (2) eine vorgespannte optische Faser ist, wobei die Spannung der optischen Faser (2) durch Haltemittel (7a, 7b) aufrechterhalten wird, wobei die Haltemittel auf jedem der beiden jeweiligen Enden (28a, 28b) der festen Hülle (4) aufliegen.

3. Faser-Bragg-Gitter-Hydrophon gemäß Anspruch 2, **dadurch gekennzeichnet, daß** die Haltemittel (7a, 7b) außerhalb der Fluidkammer (1) angeordnet sind, wobei jedes Haltemittel (7a, 7b) ein mit der festen Hülle (4) fest verbundenes erstes Ende (8) und ein von der optischen Faser (2) durchquertes und mit dieser fest verbundenes zweites Ende (9) aufweist.

4. Faser-Bragg-Gitter-Hydrophon gemäß einem der Ansprüche 1 bis 3, **dadurch gekennzeichnet, daß** es wenigstens einen mit der Fluidkammer zusammenwirkenden hydrostatischen Filter (14a, 10b) aufweist, wobei jeder hydrostatische Filter (10a, 10b) ein Loch (13a, 13b) aufweist, das geeignet ist, eine Fluidverbindung zwischen dem Inneren und dem Äußeren der Fluidkammer (1) zu ermöglichen.

5. Faser-Bragg-Gitter-Hydrophon gemäß Anspruch 4, **dadurch gekennzeichnet, daß** jeder hydrostatische Filter (10a, 10b) einer der jeweiligen verformbaren Membranen (6a, 6b) zugeordnet ist, wobei jeder hydrostatische Filter (10a, 10b) einen durch eine verformbare äußere Hülle (12a, 12b) und durch eins der Enden (28a, 28b) der festen Hülle (4) begrenzten Tank (11a, 11b) aufweist, wobei der Tank (11a, 11b) durch das die verformbare Membrane (6a, 6b) durchquerende Loch (13a, 13b) mit der Fluidkammer (1) in Fluidverbindung steht, wobei die verformbare äußere Hülle (12a, 12b) hermetisch an der festen Hülle (4) befestigt ist.

6. Faser-Bragg-Gitter-Hydrophon gemäß Anspruch 5, **dadurch gekennzeichnet, daß** der Querschnitt der verformbaren Membranen (6a, 6b) kleiner als der der verformbaren äußere Hülle (12a, 12b) der hydrostatischen Filter (10a, 10b) ist.

7. Faser-Bragg-Gitter-Hydrophon gemäß einem der Ansprüche 1 bis 6, **dadurch gekennzeichnet, daß** die das Hydrophon bildenden Elemente eine außerhalb des zwischen 0,4 Hz und 10 kHz liegenden Frequenzbereichs liegende Resonanzfrequenz aufweisen.

8. Faser-Bragg-Gitter-Hydrophon gemäß einem der Ansprüche 1 bis 7, **dadurch gekennzeichnet, daß** es eine äußere weiche und hermetische Hülle aufweist, die die von der Hülle (4) und den hydrostatischen Filtern (10a, 10b) gebildete Einlzeit umgibt, wobei die äußere Hülle mit einem Fluid gefüllt ist, um die äußeren Druckänderungen an die Fluidkammer (1) zu übertragen.

9. Faser-Bragg-Gitter-Hydrophon gemäß einem der Ansprüche 1 bis 8, **dadurch gekennzeichnet, daß** das komprimierbare Fluid der Fluidkammer (1) ein Kompressionsmodul von weniger als 1,5 GPa aufweist.

**Claims**

1. A fiber Bragg grating hydrophone usable within a wide acoustic frequency range, between 0.4 Hz and 10kHz, said hydrophone comprising a fluid cavity (1), and an optical fiber (2) in which a Bragg grating (3) is integrated, wherein said optical fiber (2) extends through said fluid cavity (1) in such a manner that said Bragg grating (3) is positioned inside the latter,
   **characterized in that**:

   - said fluid cavity (1) is filled with a compressible fluid and is delimited by a rigid casing (4) extending along a main longitudinal axis (X) and comprising two end faces (28a, 28b) integral with the optical fiber (2),
   - the rigid casing (4) having a length such that the length of the hydrophone is shorter than the acoustic wavelengths measured,
   - the optical fiber (2) extending in the fluid cavity (1) along the longitudinal axis (X),
   - the two end faces (28a, 28b) of the rigid casing (4) each comprising an opening (5a, 5b) closed by a deformable diaphragm (6a, 6b) fastened to said optical fiber (2), wherein said deformable diaphragm (6a, 6b) is passed through by the optical fibre (2), and is capable of being deformed by a difference in the pressures applied to its faces, causing a length variation of the optical fiber (2) measured by a variation of wavelength of a luminous flux extracted from the optical fiber (2).

2. A fiber Bragg grating hydrophone according to claim 1, **characterized in that** said optical fiber (2) is a pre-stressed optical fiber, wherein the tension of said optical fiber (2) is held by holding means (7a, 7b), with said holding means (7a, 7b) leaning on each of the end faces (28a, 28b) of the rigid casing (4), respectively.

3. A fiber Bragg grating hydrophone according to claim 2, **characterized in that** the holding means (7a, 7b) are arranged outside the fluid cavity (1), wherein each holding means (7a, 7b) has a first end (8) integral with the rigid casing (4) and a second end (9) which is passed through by the optical fiber (2) and integral with the latter.

4. A fiber Bragg grating hydrophone according to any one of claims 1 to 3, **characterized in that** it comprises at least one hydrostatic filter (10a, 10b) cooperating with the fluid cavity (1), wherein each hydrostatic filter (10a, 10b) is provided with an orifice (13a, 13b) capable of providing a fluid communication between the inside and the outside of the fluid cavity (1).

5. A fiber Bragg grating hydrophone according to claim 4, **characterized in that** each hydrostatic filter (10a, 10b) is associated with one of the deformable diaphragms (6a, 6b) respectively, wherein each hydrostatic filter (10a, 10b) includes a tank (11 a, 11b) delimited by a deformable outer casing (12a, 12b) and by one of the end faces (28a, 28b) of the rigid casing (4), said tank (11a, 11b) being in fluid communication with the fluid cavity (1), through said orifice (13a, 13b) extending through the deformable diaphragm (6a, 6b), said deformable outer casing (12a, 12b) being tightly fastened to the rigid casing (4).

6. A fiber Bragg grating hydrophone according to claim 5, **characterized in that** the section of the deformable diaphragms (6a, 6b) is smaller than that of the deformable outer casing (12a, 12b) of the hydrostatic filters (10a, 10b).

7. A fiber Bragg grating hydrophone according to any one of claims 1 to 6, **characterized in that** the elements forming said hydrophone have a resonance frequency outside the frequency range comprised between 0.4 Hz and 10 kHz.

8. A fiber Bragg grating hydrophone according to any one of claims 1 to 7, **characterized in that** it comprises a flexible and tight outer casing, surrounding the unit formed by the rigid casing (4) and the hydrostatic filters (10a, 10b), wherein said outer casing is filled with a fluid so as to transmit the pressure variations external to said fluid cavity (1).

9. A fiber Bragg grating hydrophone according to any one of claims 1 to 8, **characterized in that** the compressible fluid of the fluid cavity (1) has a compressibility modulus lower than 1.5 Gpa.

FIGURE 1

FIGURE 2

FIGURE 3

FIGURE 4

FIGURE 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006034538 A
- US 20020154860 A